(19) Europäisches Patentamt
European Patent Office
Office européen des brevets

(11) **EP 3 399 704 B1**

(12) **EUROPEAN PATENT SPECIFICATION**

(45) Date of publication and mention
of the grant of the patent:
**27.04.2022 Bulletin 2022/17**

(21) Application number: **17798571.0**

(22) Date of filing: **11.04.2017**

(51) International Patent Classification (IPC):
*H04L 12/721* <sup>(2013.01)</sup>    *H04L 12/727* <sup>(2013.01)</sup>
*H04L 12/733* <sup>(2013.01)</sup>    *H04L 12/725* <sup>(2013.01)</sup>
*H04L 12/715* <sup>(2013.01)</sup>    *H04L 12/813* <sup>(2013.01)</sup>

(52) Cooperative Patent Classification (CPC):
**H04L 45/20;** H04L 45/123; H04L 45/302;
H04L 45/64; H04L 47/20; H04L 47/76; H04L 47/805;
H04L 47/826

(86) International application number:
**PCT/CN2017/080046**

(87) International publication number:
**WO 2017/198007 (23.11.2017 Gazette 2017/47)**

(54) **METHOD AND APPARATUS FOR DETERMINING ROUTING POLICY**

VERFAHREN UND VORRICHTUNG ZUR FESTLEGUNG VON ROUTING-RICHTLINIEN

PROCÉDÉ ET APPAREIL PERMETTANT DE DÉTERMINER UNE POLITIQUE DE ROUTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2016  CN 201610327091**

(43) Date of publication of application:
**07.11.2018  Bulletin 2018/45**

(73) Proprietor: **Huawei Technologies Co., Ltd.
Longgang District
Shenzhen, Guangdong 518129 (CN)**

(72) Inventors:
• **SUN, Linlin**
**Shenzhen, Guangdong 518129 (CN)**
• **WAN, Chengpeng**
**Shenzhen, Guangdong 518129 (CN)**

(74) Representative: **Goddar, Heinz J.**
**Boehmert & Boehmert
Anwaltspartnerschaft mbB
Pettenkoferstrasse 22
80336 München (DE)**

(56) References cited:
WO-A1-2015/106795    CN-A- 101 217 479
CN-A- 102 413 545    CN-A- 103 702 361
CN-A- 104 468 411    CN-A- 105 407 010
JP-A- 2012 039 529    US-A1- 2002 145 975

## Description

This application claims priority to Chinese Patent Application No. 201610327091.9, filed with the Chinese Patent Office on May 17, 2016 and entitled "METHOD AND APPARATUS FOR DETERMINING ROUTING POLICY".

TECHNICAL FIELD

This application relates to the communications field, and in particular, to a method and an apparatus for determining a routing policy in the communications field.

BACKGROUND

Currently, high operation and maintenance costs exist for interconnections from an operations support system (Operations Support Systems, QSS) architecture to multiple systems, for example, to network management systems of multiple manufacturers. A network management system usually has its own particular routing policy, and after the routing policy is set, the routing policy does not change. In addition, the policy is oriented to operation and maintenance engineers of operators, and common enterprise users cannot understand the policy. Therefore, the routing policy cannot be dynamically adjusted according to a requirement of a user, and bandwidth is severely wasted. Moreover, in software-defined networking (Software Defined Network, SDN), there is no uniform criterion for routing algorithms of a multi-domain controller. Therefore, there is no uniform scale for comparing calculation results of a same routing policy. Consequently, the routing policy cannot satisfy multiple indicator requirements of the user.

WO 2015/106795 A1 discloses a method of classifying flows of data through a data communication network for selecting routes, the method comprising: monitoring data flows in a data communication network; generating a statistical classifier based on the monitored flows; receiving a request for a route in a data communication network for transmission of a flow of data packets; classifying the flow based on the generated statistical classifier to predict network resource requirements for transmission of the flow through the network; selecting the route for the classified flow; and generating a signal indicative of the selected route so that the flow is routed in the data communication network through the selected route.

US 2002/145975 A1 discloses a system for assisting in controlling real-time transport protocol flow through multiple networks via use of a cluster of session routers is disclosed. The system utilizes a first computer and a cluster of computers, wherein the cluster of computers comprises at least two associated computers that are connected to the first computer. Each of the associated computers comprises a second transceiver, a second memory having logic stored therein defining functions to be performed by the associated computers, and a second processor. The second processor is configured by the second memory to perform the functions of: performing an inbound screen on route information received by an associated computer, from the first computer, to determine if the received route information should be discarded; if the route information is not discarded, comparing the received and screened route information to a local policy defined within the cluster of computers; and performing an outbound screen on the received and screened information prior to transmitting the received and screened information outside the cluster of computers.

SUMMARY

This invention is defined by the appended claims. This application provides a method and an apparatus for determining a routing policy, so as to set different routing policies according to different requirements of a user on a network within different time ranges, and resolve a problem that a routing policy cannot be dynamically adjusted according to the requirement of the user.

According to a first aspect, a method for determining a routing policy is provided, where the method includes:

determining a time range that a user is currently in;
determining, according to a routing policy adjustment calendar, network requirement information that is set by the user for the time range, where the network requirement information includes M network requirements, and M weighted values that are in a one-to-one correspondence with the M network requirements, where M is a positive integer, and the M weighted values are used to measure requirement levels of the user for the M network requirements; and

configuring, for the user within the time range, a routing policy that corresponds to the network requirement information and satisfies the M network requirements, where the routing policy adjustment calendar includes the network requirement information corresponding to the time range, and the routing policy corresponding to the network requirement information, wherein multiple different network requirement indicators of the user are mapped to a uniform scale for comparing calculation results of a same routing policy.

Optionally, the uniform scale is a Fibonacci sequence routing policy consumption axis.

The network requirement may be smooth Internet access, traffic saving, and high reliability assurance.

Therefore, in the method for determining a routing policy, different routing policies are determined according to different requirements of a user on a network within different time ranges, so that the routing policy can be dynamically adjusted according to the requirement of the user.

With reference to the first aspect, in a first possible implementation of the first aspect, before the determining a time range that a user is currently in, the method further includes:

obtaining the network requirement information that is set by the user for the time range;

determining, according to the network requirement information, the routing policy that corresponds to the network requirement information and satisfies the M network requirements; and

generating the routing policy adjustment calendar according to the time range and the routing policy that is configured for the user within the time range.

In this way, a routing policy on an orchestration layer is reflected to a user interface, so that a routing policy satisfying multiple requirements of the user is formulated by combining requirement levels of the user for different network requirements. Therefore, the routing policy can satisfy a customized requirement of the user.

In another embodiment, the determining, according to the network requirement information, the routing policy that corresponds to the network requirement information and satisfies the M network requirements includes:

determining M optimal routes that respectively satisfy the M network requirements; and

determining the routing policy according to the M optimal routes and the M weighted values.

In another embodiment, the determining M optimal routes that respectively satisfy the M network requirements includes:

determining N routes that satisfy an $i^{th}$ network requirement in the M network requirements, where N is a positive integer and i satisfies $1 \leq i \leq M$;

calculating N consumption values that are in a one-to-one correspondence with the N routes; and

determining that a route corresponding to a smallest consumption value in the N consumption values is an optimal route satisfying the $i^{th}$ network requirement.

Optionally, it may further be determined, according to calculation results of the consumption values, that a route corresponding to a second smallest consumption value in the N consumption values is a backup route satisfying the $i^{th}$ network requirement, so that when a routing policy determined according to the route corresponding to the smallest consumption value cannot be implemented due to a network or the like, a routing policy determined according to the route whose consumption value is the second smallest may be used to configure a target route used in the current time range for the user.

Optionally, because there are multiple routes in each of domain controllers in an SDN network, and there are also multiple paths between control domains, the method may further include:
combining, according to an inter-domain link, intra-domain routes managed by the domain controllers; and determining, according to a combination result, the N routes that satisfy the $i^{th}$ network requirement in the M network requirements.

In an embodiment, the calculating N consumption values that are in a one-to-one correspondence with the N routes includes:

calculating N network requirement values that are in a one-to-one correspondence with the N routes; and

determining, according to a mapping relationship between a network requirement value and a consumption value, the N consumption values that are in a one-to-one correspondence with the N network requirement values, where the consumption value is used to indicate a satisfaction level of the user with a network requirement.

Optionally, when the N network requirement values that are in a one-to-one correspondence with the N routes are calculated, the N network requirement values may be respectively mapped as N routing policy requirement values identifiable by the network, and the N consumption values that are in a one-to-one correspondence with the N network requirement values are determined according to a mapping relationship between a routing policy requirement value and a consumption value.

For example, a network requirement value of smooth Internet access is a click response time (second), and a corresponding route selection policy requirement value is a route delay; a network requirement value of traffic saving is a bought bandwidth usage value proportion (percentage), and a corresponding route selection policy requirement value is a route load value; and a network requirement value of high reliability assurance is a click response success rate (percentage), and a corresponding route selection policy requirement is a route hop count.

In this way, because multiple different network requirement indicators of the user are mapped to a uniform scale, for example, a Fibonacci sequence routing policy consumption axis, a uniform measurement criterion is provided to the different network requirement indicators, comprehensive evaluation on the multiple different network requirements can be implemented, and comparison between multiple routing policies is implemented, thereby more accurately obtaining an optimal routing policy satisfying the multiple network requirements of the user.

With reference to the first aspect and any implementation of the first aspect, in a second possible implementation of the first aspect, the determining the routing policy according to the M optimal routes and the M weighted values includes:

calculating M consumption values of an $i^{th}$ optimal route in the M optimal routes respectively for the M network requirements;
determining, according to the M weighted values and the M consumption values, a weighted consumption value sum corresponding to the $i^{th}$ network requirement;
determining a variation curve of the consumption value weighted sum within the time range, where the variation curve indicates a time-dependent change of the consumption value weighted sum; and
determining M variation curves in a one-to-one correspondence with the M network requirements, and determining the routing policy according to the M variation curves.

In another embodiment, the determining the routing policy according to the M variation curves includes:

comparing areas of M regions that are respectively formed by the M variation curves and a time axis;
determining, in the M variation curves that form the M regions, that a network requirement corresponding to a variation curve that forms a region having a smallest area is a target network requirement; and
determining the routing policy according to the target network requirement, so as to configure a target route for the user according to the routing policy.

Optionally, information about the determined routing policy or the formulated routing policy adjustment calendar may further be pushed to the user, so that the user may learn a resource occupation status of the user in real time. In addition, the user is allowed to adjust the routing policy adjustment calendar according to routing policies corresponding to different network requirements set for different time periods. For example, the user may adjust a weight of each network requirement in the network requirement information according to the routing policy.

According to a second aspect, an apparatus for determining a routing policy is provided, configured to perform the method according to the first aspect or any possible implementation of the first aspect. Specifically, the apparatus includes:

a determining module, configured to determine a time range that a user is currently in, where
the determining module is further configured to determine, according to a routing policy adjustment calendar, network requirement information that is set by the user for the time range, where the network requirement information includes M network requirements, and M weighted values that are in a one-to-one correspondence with the M network requirements, where M is a positive integer, and the M weighted values are used to measure requirement levels of the user for the M network requirements; and
a configuration module, configured to configure, for the user within the time range, a routing policy that corresponds to the network requirement information and satisfies the M network requirements, where
the routing policy adjustment calendar includes the network requirement information corresponding to the time range, and the routing policy corresponding to the network requirement information,
wherein the apparatus is configured to map multiple different network requirement indicators of the user to a uniform scale for comparing calculation results of a same routing policy.

Optionally, the uniform scale is a Fibonacci sequence routing policy consumption axis. Based on the foregoing technical solutions, in the method for determining a routing policy in the embodiments of this application, different routing policies are determined according to different requirements of a user on a network within different time ranges, so that the routing policy can be dynamically adjusted according to the requirement of the user.

In addition, a routing policy on an orchestration layer is reflected to a user interface, so that a routing policy satisfying multiple requirements of the user is formulated by combining requirement levels of the user for different network requirements. Therefore, the routing policy can satisfy a customized requirement of the user.

## BRIEF DESCRIPTION OF DRAWINGS

FIG. 1 is a schematic architectural diagram of an application scenario according to an embodiment of this application;
FIG. 2 is a schematic diagram of a method for determining a routing policy according to an embodiment of this application;
FIG. 3 is a schematic diagram of a time mapping axis from a network requirement to a route selection policy requirement according to an embodiment of this application;
FIG. 4 is a flowchart of a method for determining a routing policy according to an embodiment of this application;
FIG. 5 is a schematic diagram of an intra-domain route and an inter-domain route according to an embodiment of this application;
FIG. 6 is a schematic diagram of a routing policy consumption axis according to an embodiment of this application;
FIG. 7 is a schematic diagram of a weighted consumption value sum variation curve according to an embodiment of this application;
FIG. 8 is a schematic diagram of a routing policy switching mechanism according to an embodiment of this application;
FIG. 9 is a schematic structural diagram of an apparatus for determining a routing policy according to an embodiment of this application; and
FIG. 10 is a schematic structural diagram of an apparatus for determining a routing policy according to an embodiment of this application.

## DESCRIPTION OF EMBODIMENTS

The following describes the technical solutions in the embodiments of this application with reference to the accompanying drawings in the embodiments of this application.

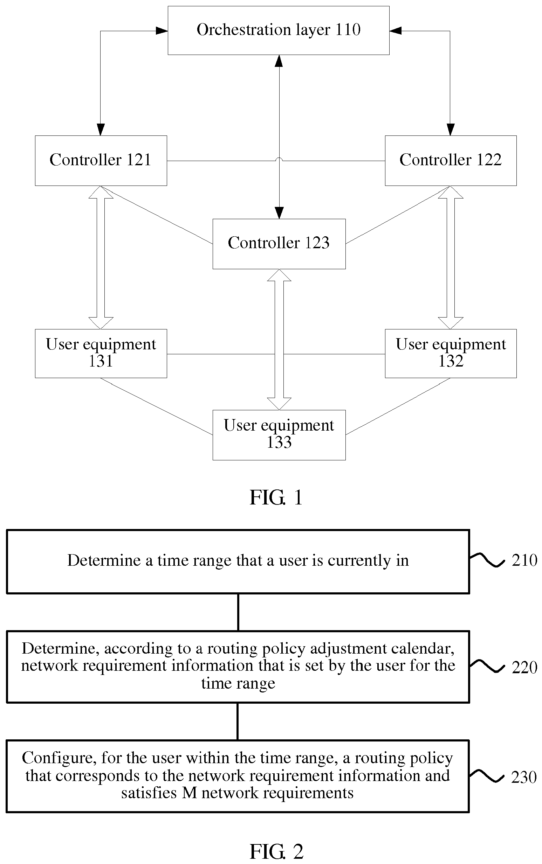

FIG. 1 is a schematic architectural diagram of an application scenario according to an embodiment of this application. An SDN network architecture includes an application layer, a control layer, and an infrastructure layer. The application layer includes various different services and applications. The application layer may manage and control a policy of a network for forwarding/processing an application, and also support configuration on an attribute of the network to improve network utilization, and ensure security and service quality of a particular application. The control layer includes an orchestration layer, a controller, and a network element abstraction layer. The control layer is mainly responsible for processing abstraction information of a data forwarding plane resource, may support summarizing and maintaining network topologies and network status information, and invokes different forwarding plane resources based on application control. The infrastructure layer (a data forwarding layer) is responsible for data processing, forwarding, and status collection based on a service-based flow table. FIG. 1 shows an orchestration layer 110, a controller 120, and user equipment 130 that are included in a control layer of an SDN network architecture. The controller (also referred to as a domain controller) 120 includes multiple controllers such as a controller 121, a controller 122, and a controller 123. The user equipment 130 includes multiple user equipments such as user equipment 131, user equipment 132, and user equipment 133. Herein, three controllers and three user equipments are used as an example. The orchestration layer 110 is interconnected to the controller 121, the controller 122, and the controller 123, so as to implement orchestration of the multiple controllers. The controller 121, the controller 122, and the controller 123 may control network forwarding according to real-time network information.

In the prior art, during evolution of the SDN network, a software-defined packet transport network (Software Defined Packet Transport Network, SPTN) solution is used. The solution includes an S controller and a D controller. Segment routing calculation is performed by the controllers. Herein, three routing policies are provided for use, for example, a smallest delay (each layer controller calculates delay information of each span, and calculates a path according to a smallest end-to-end delay), a smallest hop count (which makes that a service passes through a smallest quantity of network elements and occupies a relatively small network resource without considering a delay factor), and load balancing (the controller analyzes a load status of each path in the network and distributes a service onto different links, so as to prevent traffic imbalance in the network and maximize usage of network resources). The basic principle is that each controller calculates a route according to a routing policy predetermined by a user, and combine the routes, so as to form an integrated route.

However, the SPTN has the following disadvantages: First, a routing policy is adjusted to a backup path by means of manual triggering or protection switching, and a policy used by the backup path is the same as a policy used by a working path without considering a route usage of a current network. Therefore, the routing policy cannot be dynamically adjusted in real time according to a requirement of a user, and bandwidth may be severely wasted. Second, because a routing algorithm of a multi-domain controller does not have a uniform criterion but has only a uniform northbound interface, there is no uniform scale for comparing calculation results of a same routing policy (there are usually multiple routes between boundary points, resulting in a problem of intra-domain route selection and global route selection. Therefore, a routing policy is determined according to only an indicator having a highest requirement, and comprehensive evaluation cannot be performed on multiple requirement indicators of the user. Consequently, multiple different requirements of the user cannot be simultaneously satisfied.

Therefore, an embodiment of this application provides a method for determining a routing policy, so as to set different routing policies according to different requirements of a user on a network within different time ranges, and resolve a problem that a routing policy cannot be dynamically adjusted according to the requirement of the user.

In addition, in the method provided in this embodiment of this application, a routing policy on an orchestration layer is reflected to a user interface, so that a routing policy satisfying multiple requirements of the user is formulated by combining requirement levels of the user for different network requirements. Therefore, the routing policy can satisfy a customized requirement of the user.

In addition, because multiple different network requirement indicators of the user are mapped to a uniform scale, for example, a Fibonacci sequence routing policy consumption axis, a uniform measurement criterion is provided to the different network requirement indicators, and comprehensive evaluation on multiple different network requirements is implemented, thereby more accurately obtaining an optimal routing policy satisfying the multiple network requirements of the user.

FIG. 2 is a schematic diagram of a method for determining a routing policy according to an embodiment of this application. As shown in FIG. 2, the method may be performed in an orchestration layer 110 in an SDN network. The execution body is referred to as the orchestration layer 110 for short below. The method for determining a routing policy includes the following steps: 210: Determine a time range that a user is currently in.

220: Determine, according to a routing policy adjustment calendar, network requirement information that is set by the user for the time range, where the network requirement information includes M network requirements, and M weighted values that are in a one-to-one correspondence with the M network requirements, where M is a positive integer, and the M weighted values are used to measure requirement levels of the user for the M network requirements.

230: Configure, for the user within the time range, a routing policy that corresponds to the network requirement information and satisfies the M network requirements.

The routing policy adjustment calendar includes the network requirement information corresponding to the time range, and the routing policy corresponding to the network requirement information. The routing policy is reflected as a policy for selecting a routing channel, for a packet in an actual communications network, between communications devices.

Specifically, the routing policy adjustment calendar includes multiple pieces of network requirement information and multiple routing policies corresponding to the multiple pieces of network requirement information, and the multiple pieces of network requirement information are in a one-to-one correspondence with the multiple routing policies. The orchestration layer 110 is directly oriented to the user, so that the user may customize a personalized Internet access requirement of the user. Therefore, the orchestration layer 110 may find, according to the network requirement information that is set by the user, the routing policy corresponding to the network requirement information from the routing policy adjustment calendar.

The network requirement information may include the M network requirements, and the M weighted values that are in a one-to-one correspondence with the M network requirements, where M is a positive integer. The user may respectively allocate different weights to different network requirements, so as to represent a requirement level of the user for each network requirement.

It should be understood that the user may allocate different weights to different network requirements according to a requirement of the user. Alternatively, the user may set only various network requirements of the user, and the orchestration layer 110 evenly allocates weights to the multiple network requirements set by the user or allocates weights to the multiple network requirements according to a fixed ratio.

Therefore, different routing policies are determined according to different requirements of a user on a network within different time ranges, so that the routing policy can be dynamically adjusted according to the requirement of the user.

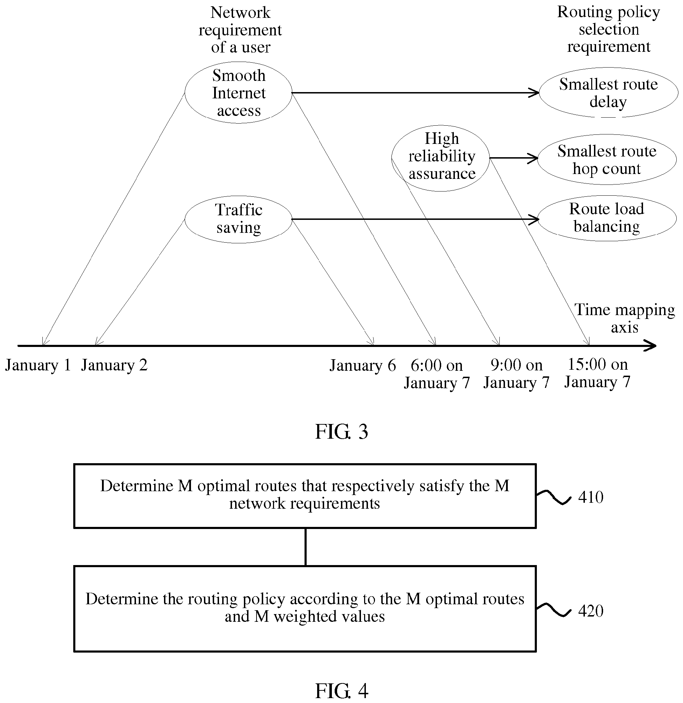

The following describes a correspondence between network requirement information and a routing policy in detail with reference to FIG. 3. FIG. 3 is a schematic diagram of a time mapping axis from a network requirement to a route selection policy requirement according to an embodiment of this application. FIG. 3 shows network requirements of a user within different time ranges. Each network requirement corresponds to one route selection policy requirement. For example, a route selection policy requirement corresponding to smooth Internet access is a smallest route delay, a route selection policy requirement corresponding to traffic saving is load balancing, and a route selection policy requirement corresponding to high reliability assurance is a click response success rate. The user has different network requirements within different time ranges, so that route selection policy requirements within different time ranges are also different, and used routing policies are different. Therefore, personalized adjustment performed by the user on the network routing policy can be implemented.

For example, if the user watches a movie online, smooth Internet access is preferentially ensured. Because the user normally works on day from Monday to Friday and does not use wideband, the user can release bandwidth of the user, so that bandwidth costs are reduced and the released bandwidth may be provided to another user who needs the bandwidth. On Saturday and Sunday, if the user needs to log in to a bank website to perform shopping online, high reliability is required to ensure a correct operation of a key service such as an order. These requirements are reflected in routes in a network. To fluently play a movie, a route selection requires a smallest delay. If traffic needs to be saved, actually, route bandwidth needs to be adjusted in real time, and it needs to be ensured that another service is not affected in a bandwidth adjustment process. This requirement is reflected as load balancing in a routing policy. If shopping online is performed on weekend, high reliability is required, and this requirement is reflected, as a smallest quantity of devices on a route, in a route, that is, a route whose hop count is the smallest.

It should be understood that the network requirement of the user is not limited thereto. The network requirement information that is set by the user may include multiple network requirements. Herein, three network requirements, such as smooth Internet access, traffic saving, and high reliability assurance, in the M network requirements are used as an example for description.

Table 1 shows correspondences between network requirements and measure parameters measuring satisfaction levels of the network requirements, and route selection policy requirements corresponding to the network requirements. As shown in Table 1, a route selection policy requirement corresponding to smooth Internet access is a small route delay, and a measure parameter of the requirement is a click response time (second). A route selection policy requirement corresponding to traffic saving is route load balancing, and a measure parameter of the requirement is a bought bandwidth usage value proportion (percentage). A route selection policy requirement corresponding to high reliability assurance is a small route hop count, and a measure parameter of the requirement is a click response success rate (percentage).

**Table 1**

| Network requirement | Measure parameter | Route selection policy requirement |
|---|---|---|
| Smooth Internet access | Click response time (second) | Small route delay |
| Traffic saving | Bought bandwidth/used bandwidth (percentage) | Load balancing |
| High reliability assurance | Click response success rate (percentage) | Small route hop count |

In another embodiment, before the determining a time range that a user is currently in, the method further includes:

240: Obtain the network requirement information that is set by the user for the time range.
250: Determine, according to the network requirement information, the routing policy that corresponds to the network requirement information and satisfies the M network requirements.
260: Generate the routing policy adjustment calendar according to the time range and the routing policy that is configured for the user within the time range.

Specifically, the orchestration layer 110 may generate a routing policy adjustment calendar. The orchestration layer 110 determines, according to multiple pieces of different network requirement information that is set by the user for different time ranges, multiple routing policies that are in a one-to-one correspondence with the multiple pieces of network requirement information. In addition, the orchestration layer 110 stores the correspondences between the multiple pieces of network requirement information and the multiple routing policies to form a routing policy calendar.

After determining the time range that the user is currently in, the orchestration layer 110 may find, according to the routing policy adjustment calendar, the routing policy that corresponds to the network requirement information that is set by the user for the time range, and select an appropriate target route for the user according to the routing policy.

Therefore, a routing policy on the orchestration layer 110 is reflected to a user interface, so that a routing policy satisfying multiple requirements of the user is formulated by combining requirement levels of the user for different network requirements. Therefore, the routing policy can satisfy a customized requirement of the user.

The following describes how to determine the corresponding routing policy according to the network requirement information in 230 in detail with reference to FIG. 4 to FIG. 7. It should be understood that the routing policy corresponding to each piece of network requirement information in the routing policy calendar may be performed according to the method described in detail below. A difference lies in that the pieces of network requirement information that are used to determine the routing policies are different. Therefore, the routing policies finally determined by the orchestration layer 110 for the different pieces of network requirement information are also different.

FIG. 4 is a schematic flowchart of a method for determining a routing policy according to an embodiment of this application. The method shown in FIG. 4 is performed by an orchestration layer 110. The orchestration layer 110 determines the corresponding routing policy in the routing policy calendar according to the network requirement information that is set by the user. In 250, the determining, according to the network requirement information, the routing policy that corresponds to the network requirement information and satisfies the M network requirements includes:
410: Determine M optimal routes that respectively satisfy the M network requirements.

Specifically, after obtaining the M network requirements included in the network requirement information that is set by the user, and the M weighted values that are in a one-to-one correspondence with the M network requirements, the orchestration layer 110 determines the M optimal routes that are in a one-to-one correspondence with the M network requirements.

For example, M=3, the network requirement information that is set by the user includes three network requirements: smooth Internet access, traffic saving, and high reliability assurance, and weighted values allocated by the user to the three network requirements are respectively 40%, 30%, and 30%. The orchestration layer 110 determines three optimal routes that are in a one-to-one correspondence with the three network requirements. For example, the orchestration layer 110 determines a corresponding optimal route *l*1 satisfying the network requirement: smooth Internet access, a corresponding optimal route *l*2 satisfying the network requirement: traffic saving, and a corresponding optimal route *l*3 satisfying the network requirement: high reliability assurance.

420: Determine the routing policy according to the M optimal routes and the M weighted values. Specifically, the orchestration layer 110 determines, according to the obtained M optimal routes and the M weighted values, a target route configured for the user.

For example, the orchestration layer 110 determines, according to the optimal routes (11, 12, and 13) that respectively correspond to the three network requirements: smooth Internet access, traffic saving, and high reliability assurance, and the weighted values (40%, 30%, and 30%) respectively allocated by the user to the three network requirements, a target route that is finally selected for the user.

It should be noted that a larger weighted value allocated by the user to a particular network requirement indicates a higher requirement of the user on the network requirement, and a smaller weighted value allocated by the user to a particular network requirement indicates a lower requirement of the user on the network requirement.

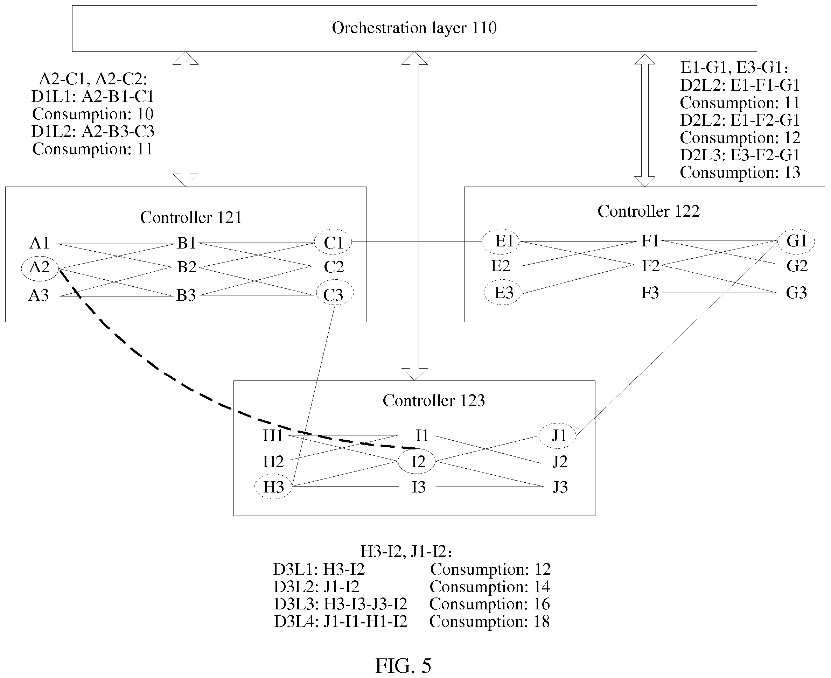

In 410, the orchestration layer 110 first determines the M optimal routes that respectively satisfy the M network requirements. As shown in FIG. 4, an entire network includes the inter-domain orchestration layer 110 and a controller 120. The orchestration layer 110 is directly oriented to tenants, and a tenant may customize a personalized network requirement of the tenant. The inter-domain orchestration layer is responsible for delivering a specific routing policy to a specific controller, such as a controller 121, a controller 122, and a controller 123, so that the controller 121, the controller 122, and the controller 123 calculate routes separately. The orchestration layer 110 delivers algorithm tasks of the controllers by using a uniform scheduling algorithm, so as to mainly resolve a connection problem between domains. However, many problems that do not exist in calculation of routes within a single domain may be caused. FIG. 5 is a schematic diagram of an intra-domain route and an inter-domain route according to an embodiment of this application. For example, if a route from A2 to I2 in FIG. 5 is in one domain, a routing algorithm of the domain is directly invoked. A general routing algorithm provides an order of routes satisfying a requirement. For an inter-domain route, a possible routing combination needs to be analyzed by an orchestration layer, and multiple route calculation requests are delivered within one domain. This is complex. Therefore, in a routing policy, multiple route combinations are calculated and returned, resulting in a problem of splicing of multiple routes and overlapped consumption. Therefore, consumption mapping needs to be performed before actual consumption overlaps.

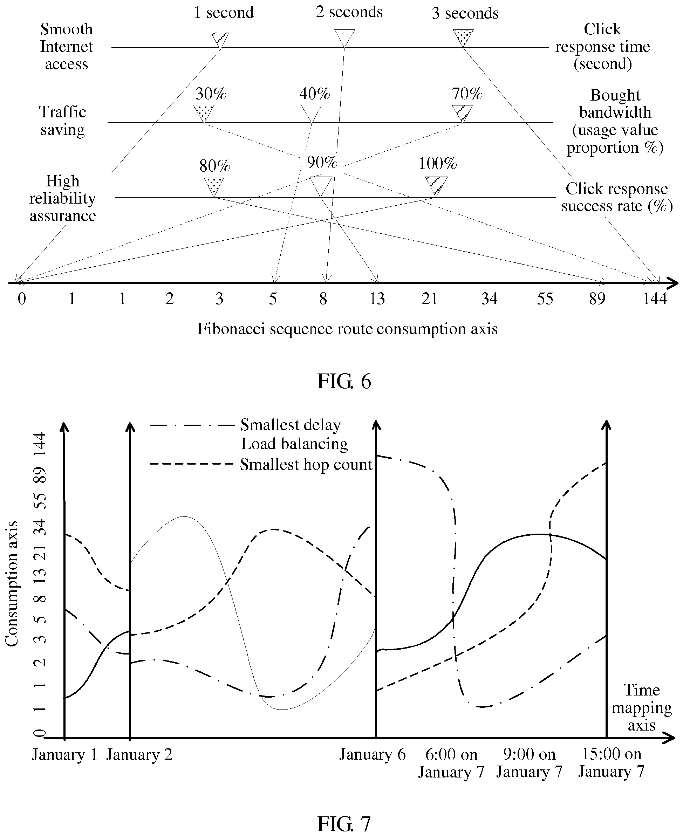

To compare different routing policies, and compare consumption of different controllers using a same routing policy, a routing policy consumption mapping scale is introduced to an embodiment of this application, and details are shown in FIG. 6. FIG. 6 is a schematic diagram of a routing policy consumption axis according to an embodiment of this application. The user may map, according to the satisfaction level of the user with the network requirement, a corresponding network requirement value to the consumption axis.

Specifically, a satisfaction level of a user with a network service is directly reflected in measurement on a specific requirement. For example, if no pause is identified with naked eyes during a click, an operation, or video dragging, a requirement: smooth Internet access is satisfied. According to statistics, a speed of reaction of human optic nerves is 1/24 second. Therefore, for a video service, a consumed time should be within the 1/24 second. If a click on a page is within one second, a time difference cannot be sensed. Therefore, requirements of different network services has different requirements on time and has different requirements on quality. Therefore, the user needs to define a satisfaction level with a network, and maps satisfaction levels of different network requirements to a uniform consumption axis.

For example, the user may map a network requirement value of a satisfaction level with each network requirement to a uniform route consumption axis. Optionally, the route consumption axis is a Fibonacci sequence route consumption axis, and a consumption value on the consumption axis is a value that is in a Fibonacci sequence and to which the network requirement value is mapped. That is, the user uniformly maps satisfaction levels with all network requirements to the Fibonacci sequence route consumption axis, so that satisfaction levels of the user with different network requirements are mapped to one axis, thereby facilitating comparison between policies. A specific value corresponding to a satisfaction level needs to have a corresponding preset default value, and a basic principle may be that a higher satisfaction level indicates a smaller route consumption value. In a case of dissatisfaction, a larger consumption value indicates that a route at that time needs to be avoided as far as possible. In addition, a Fibonacci sequence has such a characteristic, that is, a larger value indicates a larger increase and a growing tendency to become uncontrollable. Herein, the route consumption value is also referred to as a consumption value for short.

On a user side, parameters measuring the network requirements are different. For example, units of parameter values of a click response time, bought bandwidth/used bandwidth, and a click response success rate are different, for example, the unit may be a second or a percentage. Therefore, these parameters that cannot be measured in a uniform manner need to be mapped to a same axis by using the consumption axis, thereby facilitating comparison.

On a route side, routing policy selection requirements corresponding to the network requirements are different. For example, in Table 1, routing policy selection requirements that respectively correspond to the network requirements: smooth Internet access, traffic saving, and high reliability assurance are a small route delay, a small route hop count, and route load balancing. During route calculation, parameters such as a delay and a hop count need to be mapped to one consumption axis, so that the parameters have a uniform measurement criterion. Therefore, quality of routes satisfying different network requirements may be measured and compared by using the uniform measurement criterion, so as to accurately select a routing policy satisfying the multiple requirements.

As shown in FIG. 6, the Fibonacci sequence route consumption axis has no unit. A higher satisfaction level of the user with each network requirement indicates a smaller route consumption value mapped to the Fibonacci sequence route consumption axis. A lower satisfaction level of the user with each network requirement indicates a larger route consumption value mapped to the Fibonacci sequence route consumption axis. As shown in FIG. 6, smooth Internet access requires a short click response time. When the click response time is 1s, the satisfaction level of the user is relatively high, so that the route consumption value is very small, for example, the route consumption value may be 0. When the click response time is 2s, the satisfaction level of the user is moderate, so that the route consumption value is moderate, for example, the route consumption value may be 8. When the click response time is 3s, the satisfaction level of the user is very low, so that the route consumption value is relatively large, for example, the route consumption value may be 144. Table 2 shows an example of mapping relationships between satisfaction levels with network requirements and route consumption values.

**Table 2**

| Measure parameter | Click response time (s) | | | Bought bandwidth/used bandwidth (%) | | | Click response success rate (%) | | |
|---|---|---|---|---|---|---|---|---|---|
| Measure parameter value | 1 | 2 | 3 | 30% | 40% | 70% | 80% | 90% | 100% |
| Route consumption value | 0 | 8 | 144 | 144 | 5 | 0 | 89 | 13 | 0 |

It should be understood that the mapping relationship between specific values shown in Table 2 is merely an example rather than limitative. When the basic principle that "a higher satisfaction level indicates a smaller route consumption value" is satisfied, a relationship between a satisfaction level of a user with a network requirement and a route consumption value may be adjusted based on a mapping relationship set by a network operation and maintenance engineer and according to a network status of the user. This is not limited in this application.

Therefore, because multiple different network requirement indicators of the user are mapped to a uniform scale, for example, a Fibonacci sequence routing policy consumption axis, a uniform measurement criterion is provided to the different network requirement indicators, and comprehensive evaluation on multiple different network requirements is implemented, thereby more accurately obtaining an optimal routing policy satisfying the multiple network requirements of the user.

In another embodiment, in 410, the determining M optimal routes that respectively satisfy the M network requirements includes:

411. Determine N routes that satisfy an $i^{th}$ network requirement in the M network requirements, where N is a positive integer.

412. Calculate N consumption values that are in a one-to-one correspondence with the N routes.

413: Determine that a route corresponding to a smallest consumption value in the N consumption values is an optimal route satisfying the ith network requirement.

Specifically, the orchestration layer 110 determines the N routes that the user can use, determines the N routes that satisfy the ith network requirement in the M network requirements, and calculates respective consumption values of the N routes. The consumption values are the N consumption values that are in a one-to-one correspondence with the N routes. The orchestration layer 110 selects the smallest consumption value from the N consumption values of the N routes that satisfy the ith network requirement, and determines that the route corresponding to the smallest consumption value is the optimal route of the ith network requirement.

N is a positive integer and i is a positive integer satisfying $1 \leq i \leq M$.

In another embodiment, the calculating N consumption values that are in a one-to-one correspondence with the N routes includes:

4121: Calculate N network requirement values that are in a one-to-one correspondence with the N routes.

4122: Determine, according to a mapping relationship between a network requirement value and a consumption value, the N consumption values that are in a one-to-one correspondence with the N network requirement values, where the consumption value is used to indicate a satisfaction level of the user with a network requirement.

Specifically, referring to Table 1 and with reference to the manner described above that the user maps the satisfaction level with each network requirement to the uniform route consumption axis, the orchestration layer 110 may convert the consumption values of the N routes to consumption values on the Fibonacci sequence consumption axis according to the mapping relationship between a network requirement value and a consumption value.

For example, it is assumed that M=3, when i=1, it indicates a first network requirement (smooth Internet access); when i=2, it indicates a second network requirement (traffic saving); when i=3, it indicates a third network requirement (high reliability assurance). The weighted values respectively allocated by the user to the three network requirements are 40% for smooth Internet access, 30% for traffic saving, and 30% for high reliability assurance, and the optimal routing policies respectively corresponding to the three network requirements: smooth Internet access, traffic saving, and high reliability assurance are $l1$, $l2$, and $l3$.

The orchestration layer 110 first calculates, when i=1, a consumption value of each route in N routes that correspond to the first network requirement (smooth Internet access), and determines the route $l1$ whose consumption value is the smallest (assuming that the consumption value is $x1$); when i=2, calculates respective consumption values of N routes that correspond to the second network requirement (traffic saving), and determines the route $l2$ whose consumption value is the smallest (assuming that the consumption value is y2); when i=3, calculates respective consumption values of N routes that correspond to the third network requirement (high reliability assurance), and determines the route $l3$ whose consumption value is the smallest (assuming that the consumption value is z3).

Specifically, for a single routing policy, because each domain controller returns multiple routes, assembling needs to be performed according to an inter-domain link. Multiple connected routes are spliced, and there are multiple combinations. As shown in FIG. 5, a route from A2 to I2 needs to be implemented.

In the controller 121, routing nodes that can be connected to another controller are C1 and C3, so that there are two paths from A2 to C1 or C3, and the paths are respectively D1L1: A2-B1-C1 and D1L2: A2-B3-C3.

In the controller 122, routing nodes that can be connected to another controller are E1, E3, and G1, so that there are three paths from E1 to G1 and E3 to G1, and the paths are respectively D2L1: E1-F1-G1, D2L2: E2-F1-G1, and D2L3: E3-F2-G1.

In the controller 123, routing nodes that can be connected to another controller are H3 and J1, and a target node is J2. There are four paths from H3 to G1, and the paths are respectively D3L1: H3-I2, D3L2: J3-I2, D3L3: H3-I3-J3-I2, and D3L4: J1-I1-H1-I2.

The controller 121, the controller 122, and the controller 123 separately calculate route consumption values within domains respectively controlled by the controller 121, the controller 122, and the controller 123, and feed back the consumption values to the orchestration layer 110, so that the orchestration layer 110 assembles and splices the foregoing multiple routes according to the inter-domain link, to obtain a total consumption value of all integrated routes shown in Table 3. The consumption values shown in Table 3 are the N consumption values of the N routes that correspond to the ith network requirement. For example, i=1.

**Table 3**

| Integrated route | Consumption value |
| --- | --- |
| D1L1→L1→D2L1→L3→D3L2 | 10+Cost(L1)+11+Cost(L3)+14 |
| D1L1→L1→D2L1→L3→D3L4 | 10+Cost(L1)+11+Cost(L3)+18 |

(continued)

| Integrated route | Consumption value |
|---|---|
| D1L1→L1→D2L2→L3→D3L2 | 10+Cost(L1)+12+Cost(L3)+14 |
| D1L1→L1→D2L2→L3→D3L4 | 10+Cost(L1)+12+Cost(L3)+18 |
| D1L2→L2→D2L3→L3→D3L2 | 11+Cost(L2)+13+Cost(L3)+14 |
| D1L2→L2→D2L3→L3→D3L4 | 11+Cost(L2)+13+Cost(L3)+18 |
| D1L2→L3→D3L1 (l1) | 11+Cost(L3)+12 (x1) |
| D1L2→L3→D3L3 (l1') | 11+Cost(L3)+18 (x1') |

The orchestration layer 110 selects, according to calculation results of the consumption values, a route whose consumption value is the smallest, for example, D1L2→L3→D3L1, as the optimal route $l1$ when i=1. Correspondingly, the orchestration layer 110 may respectively determine the optimal route $l2$ when i=2 and the optimal route $l3$ when i=3 in a same manner. For brevity, details are not described herein again.

The orchestration layer 110 may finally obtain the optimal routes $l1$, $l2$, and $l3$ shown in Table 4, and consumption values of the optimal routes $l1$, $l2$, and $l3$ during consumption value calculation for each network requirement. Table 4 shows correspondences between network requirements and consumption values of optimal routes.

**Table 4**

| Optimal route | Consumption value | | |
|---|---|---|---|
| | i=1 (40%) | i=2 (30%) | i=3 (30%) |
| l1 | x1 (the smallest among x1, x2, and x3) | y1 | z1 |
| l2 | x2 | y2 (the smallest among y1, y2, and y3) | z2 |
| l3 | x3 | y3 | z3 (the smallest among z1, z2, and z3) |

After determining the optimal route corresponding to each network requirement, the orchestration layer 110 determines, in combination with the weighted value allocated by the user to each network requirement, the target route configured for the user.

In another embodiment, in 420, the determining the routing policy according to the M optimal routes and the M weighted values includes:

421: Calculate M consumption values of an $i^{th}$ optimal route in the M optimal routes respectively for the M network requirements.
422: Determine, according to the M weighted values and the M consumption values, a weighted consumption value sum corresponding to the $i^{th}$ network requirement.
423: Determine a variation curve of the consumption value weighted sum within the time range, where the variation curve indicates a time-dependent change of the consumption value weighted sum.
424: Determine M variation curves that are in a one-to-one correspondence with the M network requirements, and determine the routing policy according to the M variation curves.

Specifically, the orchestration layer 110 calculates, according to the weighted value allocated by the user to each network requirement in the M network requirements, and the consumption value of the optimal route satisfying each network requirement, a weighted consumption value sum corresponding to each network requirement in the M network requirements. Because a network status changes at each moment, the orchestration layer 110 calculates, according to the foregoing method, consumption value weighted sums corresponding to the network requirements at different moments, and draws a variation curve of the consumption value weighted sum corresponding to each network requirement within a period. Therefore, a target routing policy configured for the user within the time period is determined according to the variation curve.

For example, when i=1, the optimal route corresponding to the first network requirement (smooth Internet access) is 11, and the allocated weighted value is 40%; when i=2, the optimal route corresponding to the second network requirement (traffic saving) is 12, and the allocated weighted value is 30%; when i=3, the optimal route corresponding to the third network requirement (high reliability assurance) is 13, and the allocated weighted value is 30%.

According to Table 4, the orchestration layer 110 may obtain that consumption values when the route $l1$ separately satisfies the first network requirement, the second network requirement, and the third network requirement are $x1$, $y1$, and $z1$, consumption values when the route $l2$ separately satisfies the first network requirement, the second network requirement, and the third network requirement are $x2$, $y2$, and $z2$, and consumption values when the route $l3$ separately satisfies the first network requirement, the second network requirement, and the third network requirement are $x3$, $y3$, and $z3$.

Therefore, a weighted consumption value sum X corresponding to the optimal route $l1$ is:

$$X=x1*40\%+y1*30\%+z1*30\%.$$

A weighted consumption value sum Y corresponding to the optimal route $l2$ is:

$$Y=x2*40\%+y2*30\%+z2*30\%.$$

A weighted consumption value sum Z corresponding to the optimal route $l3$ is:

$$Z=x3*40\%+y3*30\%+z3*30\%.$$

Herein, a time axis is introduced. The orchestration layer 110 calculates a weighted consumption value sum variation curve within a time period, and separately determines, in a coordinate system formed by the time axis and the consumption axis, variation curves of the consumption value weighted sums X, Y, and Z. FIG. 7 is a schematic diagram of a weighted consumption value sum variation curve according to an embodiment of this application. As shown in FIG. 7, the orchestration layer 110 determines, in the coordinate system formed by the time axis and the consumption value, the consumption value weighted sum variation curve of the user in each time period.

The time period herein means that the user sets same network requirement information in a same time period. Referring to the time mapping axis in FIG. 3, each time range may be referred to as a time period. Each time the user uses a network within the time period, the orchestration layer 110 configures, according to network requirement information that is set by the user for the time period, a corresponding routing policy for the network requirement information.

In another embodiment, in 424, the determining the routing policy according to the M variation curves includes:

4241: Compare areas of M regions that are respectively formed by the M variation curves and a time axis.
4242: Determine, in the M variation curves that form the M regions, that a network requirement corresponding to a variation curve that forms a region having a smallest area is a target network requirement.
4243: Determine the routing policy according to the target network requirement, so as to configure a target route for the user according to the routing policy.

Specifically, the orchestration layer 110 measures a quality contribution of the routing policy within each period by calculating an area of a region formed by the consumption value weighted sum variation curve and the time axis. For periodic route selection for multiple quality indicator requirements, both weighted mapping of multiple quality indicators and area calculation based on the time axis are considered, so as to finally determine route selection.

Using a weighted value variation curve in a time period from January 2 to January 6 as an example. A satisfaction level of the user in a time range is reflected as an area between the curve and the time axis in FIG. 7. A smaller area indicates less consumption and a higher satisfaction level of the user with a requirement. As shown in FIG. 7, areas of regions formed by the consumption value weighted sums variation curves X, Y, and Z and the time axis are different. It may be seen that within the time period from January 2 to January 6, an area of a region formed by the consumption value weighted sum variation curve X corresponding to the optimal route $l1$ and the time axis is the smallest, and it indicates a smaller consumption value and a higher satisfaction level of the user with a requirement.

In this case, the orchestration layer 110 selects the first network requirement corresponding to the optimal route $l1$ as a criterion for selecting a target route for the user within the time period. The optimal route $l1$ is an optimal route corresponding to i=1, that is, an optimal route corresponding to the first network requirement: smooth Internet access. The optimal route is determined according to a smallest delay, that is, a route whose click response time is the shortest is selected as the optimal route (correspondingly, in the routing policy, a mapping consumption value of the click response time on the consumption axis is the smallest).

Therefore, the routing policy determined by the orchestration layer 110 for the time period is that: when the user uses an SDN network within the time period, the orchestration layer 110 calculates and selects a route whose consumption value is the smallest in the N routes that correspond to the first network requirement (i=1) as the target route configured for the user. That is, a route whose delay is the smallest is selected as the final routing policy.

Analysis on another time period is the same as that in the description above. For brevity, details are not described herein again. For the case shown in FIG. 7, a routing policy adjustment calendar shown in Table 5 may be finally obtained. According to Table 5, in subsequent time, the orchestration layer 110 may periodically determine a corresponding routing policy for the user, so as to configure a target route for the user in real time according to the routing policy.

**Table 5**

| Time period | Routing policy |
| --- | --- |
| January 1 to January 2 | Selecting a route whose delay is the smallest as a target route |
| January 3 to January 5 | Selecting a route whose load is balanced as a target route |
| January 6 to January 7 | Selecting a route whose hop count is the smallest as a target route |

Herein, a time factor is considered in a process of determining the routing policy. An indicator contribution status of the routing policy within an entire time range is inspected, and indicator contribution statuses of different routing policies are represented by using a curve, so that areas of regions formed by the curve and the time axis are calculated, and a routing policy whose area is the smallest is selected as a preferred routing policy within the period.

It should be understood that when the user does not set multiple indicator requirements, the user may also use the foregoing method to determine a target route for a single indicator requirement. For example, it may be considered that a weighted value allocated by the user to the single indicator requirement is 100%, and a weighted value allocated to another requirement is 0.

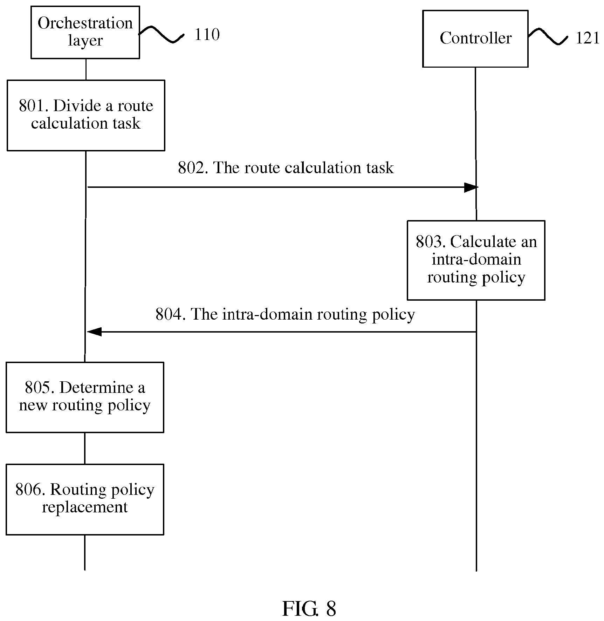

The orchestration layer 110 may switch a routing policy for the user at each change point on the time axis according to the routing policy adjustment calendar. When the user needs to switch a routing policy, a route switching method shown in FIG. 8 may be used. FIG. 8 is a schematic diagram of a routing policy switching mechanism according to an embodiment of this application. FIG. 8 includes an orchestration layer 110 and a controller 121. Herein, using the controller 121 as an example for description. Steps performed by another controller are the same as steps performed by the controller 121. For brevity, details are not described herein again. The route switching method includes the following steps.

801: The orchestration layer 110 delivers a route calculation task.

Specifically, the orchestration layer 110 delivers the route calculation task according to a routing policy time axis in a short time (for example, 3 minutes) before a policy is changed. Herein, a first timer may be set to control the short time before the policy is changed. For example, duration of the timer is set to duration starting from a time when a current routing policy is used and ending at the time 3 minutes before the policy is changed.

802: The orchestration layer 110 sends the delivered route calculation tasks to the controller 121.

803: The controller 121 calculates an intra-domain routing policy.

Specifically, the controller 121 calculates, according to the route calculation tasks delivered by the orchestration layer, multiple intra-domain routing policies within a domain controlled by the controller 121.

804: The controller 121 returns the calculated intra-domain routing policy to the orchestration layer 110.

805: The orchestration layer 110 determines a new routing policy.

Specifically, for a single routing policy, because each domain controller returns multiple routes, the orchestration layer 110 needs to perform assembling according to an inter-domain link. The orchestration layer 110 splices multiple connected routes according to the multiple intra-domain routes returned by each domain controller, and calculates consumption of an integrated route after the splicing. A result of the splicing has multiple combinations.

806: The orchestration layer 110 performs routing policy replacement.

Specifically, the orchestration layer 110 replaces a routing policy that is used by a user within a previous time range, so that a user service uses a new routing policy when a replacement trigger point is reached. Herein, a second timer may be set to control a replacement time of the routing policy. For example, a length of duration of the second timer is set to be equal to the duration of the first timer plus 3 minutes.

It should be understood that in this embodiment of this application, when selecting an optimal route corresponding to each network requirement, the orchestration layer 110 may select a route whose consumption value is the second smallest as a backup route, for example, $l1'$ in Table 4. The orchestration layer may obtain, in a same manner, an optimal route $l1'$ when i=1, an optimal route $l2'$ when i=2, and an optimal route $l3'$ when i=3. When the optimal route cannot be implemented due to a network or the like, the orchestration layer 110 may compare backup routes by using the foregoing method, and configure, by using a routing policy determined according to the route whose consumption value is the second smallest, a target route used in a current time range for the user.

It should be further understood that the orchestration layer 110 may further push information about the determined routing policy or a formulated routing policy adjustment calendar to the user, so that the user may learn a resource occupation status of the user in real time. In addition, the user is allowed to adjust a routing policy in the routing policy adjustment calendar according to routing policies corresponding to different network requirements, or routing policies corresponding to different time periods. For example, the user may adjust a weight of each network requirement in network requirement information according to the routing policy. After obtaining information adjusted by the user, the orchestration layer 110 can more accurately determine a more preferred routing policy.

In the method according to this embodiment of this application, different routing policies are set according to different requirements of a user on a network within different time ranges, thereby resolving a problem that a routing policy cannot be dynamically adjusted according to the requirement of the user.

In addition, a routing policy on an orchestration layer is reflected to a user interface, so that a routing policy satisfying multiple requirements of the user is formulated by combining requirement levels of the user for different network requirements. Therefore, the routing policy can satisfy a customized requirement of the user.

In addition, because multiple different network requirement indicators of the user are mapped to a uniform scale, for example, a Fibonacci sequence routing policy consumption axis, a uniform measurement criterion is provided to the different network requirement indicators, and comprehensive evaluation on multiple different network requirements is implemented, thereby more accurately obtaining an optimal routing policy satisfying the multiple network requirements of the user.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

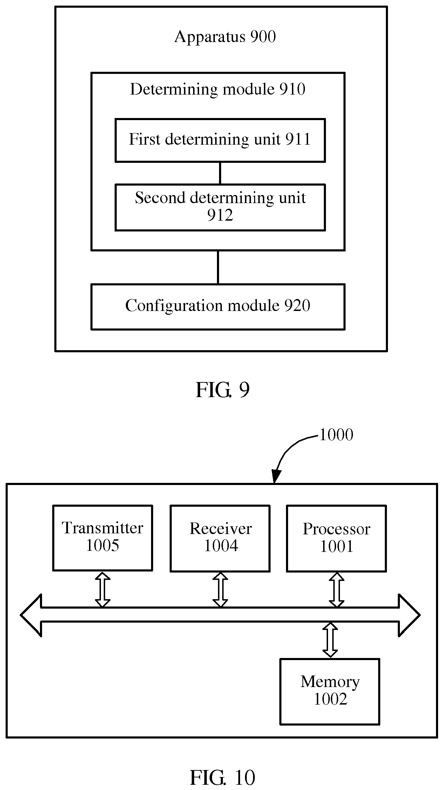

The method for determining a routing policy according to the embodiments of this application is described in detail above with reference to FIG. 2 to FIG. 8, and an apparatus 900 for determining a routing policy according to an embodiment of this application is described in detail below with reference to FIG. 9 to FIG. 10.

FIG. 9 is a structural block diagram of an apparatus for determining a routing policy according to an embodiment of this application. The apparatus 900 for determining a routing policy shown in FIG. 9 is configured to perform the method for determining a routing policy described in FIG. 2 to FIG. 8. The apparatus for determining a routing policy may be located on an orchestration layer 110. As shown in FIG. 9, the apparatus 900 for determining a routing policy includes a determining module 910 and a configuration module 920. The determining module 910 is configured to:

determine a time range that a user is currently in; and
determine, according to a routing policy adjustment calendar, network requirement information that is set by the user for the time range, where the network requirement information includes M network requirements, and M weighted values that are in a one-to-one correspondence with the M network requirements, where M is a positive integer, and the M weighted values are used to measure requirement levels of the user for the M network requirements.

The configuration module 920 is configured to configure, for the user within the time range, a routing policy that corresponds to the network requirement information and satisfies the M network requirements.

The routing policy adjustment calendar includes the network requirement information corresponding to the time range, and the routing policy corresponding to the network requirement information.

Therefore, the apparatus 900 for determining a routing policy determines different routing policies according to different requirements of a user on a network within different time ranges, so that the routing policy can be dynamically adjusted according to the requirement of the user.

In another embodiment, the determining module 910 is further configured to:

obtain the network requirement information that is set by the user for the time range;
determine, according to the network requirement information, the routing policy that corresponds to the network requirement information and satisfies the M network requirements; and
generate the routing policy adjustment calendar according to the time range and the routing policy that is configured for the user within the time range.

Therefore, the apparatus 900 for determining a routing policy reflects a routing policy on an orchestration layer to a user interface, so that a routing policy satisfying multiple requirements of the user is formulated by combining requirement levels of the user for different network requirements. Therefore, the routing policy can satisfy a customized requirement of the user.

In another embodiment, the determining module 910 includes a first determining unit 911 and a second determining unit 912. The first determining unit 911 is configured to:
determine M optimal routes that respectively satisfy the M network requirements.

The second determining unit 912 is configured to:
determine the routing policy according to the M optimal routes and the M weighted values.

In another embodiment, the first determining unit 911 includes:

a first determining subunit, configured to determine N routes that satisfy an $i^{th}$ network requirement in the M network requirements, where N is a positive integer and i satisfies $1 \leq i \leq M$;
a first calculation subunit, configured to calculate N consumption values that are in a one-to-one correspondence with the N routes; and
a second determining subunit, configured to determine that a route corresponding to a smallest consumption value in the N consumption values is an optimal route satisfying the $i^{th}$ network requirement.

In another embodiment, the first calculation subunit is specifically configured to:

calculate N network requirement values that are in a one-to-one correspondence with the N routes; and
determine, according to a mapping relationship between a network requirement value and a consumption value, the N consumption values that are in a one-to-one correspondence with the N network requirement values, where the consumption value is used to indicate a satisfaction level of the user with a network requirement.

Therefore, because the apparatus 900 for determining a routing policy maps multiple different network requirement indicators of the user to a uniform scale, for example, a Fibonacci sequence routing policy consumption axis, a uniform measurement criterion is provided to the different network requirement indicators, and comprehensive evaluation on multiple different network requirements is implemented, thereby more accurately obtaining an optimal routing policy satisfying the multiple network requirements of the user.

In another embodiment, the second determining unit 912 includes:

a third calculation subunit, configured to calculate M consumption values of an $i^{th}$ optimal route in the M optimal routes respectively for the M network requirements; and
a fourth determining subunit, configured to:

determine, according to the M weighted values and the M consumption values, a weighted consumption value sum corresponding to the $i^{th}$ network requirement;
determine a variation curve of the consumption value weighted sum within the time range, where the variation curve indicates a time-dependent change of the consumption value weighted sum; and
determine M variation curves that are in a one-to-one correspondence with the M network requirements, and determine the routing policy according to the M variation curves.

In another embodiment, the fourth determining subunit is specifically configured to:

compare areas of M regions that are respectively formed by the M variation curves and a time axis;
determine, in the M variation curves that form the M regions, that a network requirement corresponding to a variation curve that forms a region having a smallest area is a target network requirement; and
determine the routing policy according to the target network requirement, so as to configure a target route for the user according to the routing policy.

As shown in FIG. 10, an embodiment of this application further provides an apparatus 1000 for determining a routing policy. The apparatus 1000 for determining a routing policy includes a processor 1001, a memory 1002, a receiver 1004, and a transmitter 1005. The processor 1001, the memory 1002, and the receiver 1004 communicates with each other by using an internal connection channel. The memory 1002 is configured to store an instruction. The processor 1001 is configured to execute the instruction stored in the memory 1002, and control the receiver 1004 to receive information. The processor 1001, the memory 1002, the receiver 1004, and the transmitter 1005 may be implemented by using one or more chips. For example, the processor 1001, the memory 1002, the receiver 1004, and the transmitter 1005 may all be integrated into one chip; alternatively, the processor 1001, the receiver 1004, and the transmitter 1005 may be integrated into one chip, and the memory 1002 is integrated into another chip, and a specific form is not limited herein. The processor 1001 is configured to:

determine a time range that a user is currently in;

determine, according to a routing policy adjustment calendar, network requirement information that is set by the user for the time range, where the network requirement information includes M network requirements, and M weighted values that are in a one-to-one correspondence with the M network requirements, where M is a positive integer, and the M weighted values are used to measure requirement levels of the user for the M network requirements; and configure, for the user within the time range, a routing policy that corresponds to the network requirement information and satisfies the M network requirements, where the routing policy adjustment calendar includes the network requirement information corresponding to the time range, and the routing policy corresponding to the network requirement information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The memory in the embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DR RAM). The memory of the systems and methods described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A method for determining a routing policy, wherein the method comprises:

   determining (210) a time range that a user is currently in;
   determining (220), according to a routing policy adjustment calendar, network requirement information that is set by the user for the time range, wherein the network requirement information comprises M network requirements, and M weighted values (40) that are in a one-to-one correspondence with the M network requirements, wherein M is a positive integer, and the M weighted values are used to measure requirement levels of the user for the M network requirements; and
   configuring (230), for the user within the time range, a routing policy that corresponds to the network requirement information and satisfies the M network requirements, wherein the routing policy adjustment calendar comprises the network requirement information corresponding to the time range, and the routing policy corresponding to the network requirement information,
   wherein multiple different network requirement indicators of the user are mapped to a uniform scale for comparing calculation results of a same routing policy.

2. The method of claim 1, wherein the uniform scale is a Fibonacci sequence routing policy consumption axis.

3. The method according to claim 1, wherein before the determining a time range that a user is currently in, the method further comprises:

   obtaining the network requirement information that is set by the user for the time range;
   determining, according to the network requirement information, the routing policy that corresponds to the network requirement information and satisfies the M network requirements; and
   generating the routing policy adjustment calendar according to the time range and the routing policy that is configured for the user within the time range.

4. The method according to claim 3, wherein the determining, according to the network requirement information, the routing policy that corresponds to the network requirement information and satisfies the M network requirements comprises:

   determining (410) M optimal routes that respectively satisfy the M network requirements; and
   determining (420) the routing policy according to the M optimal routes and the M weighted values (40).

5. The method according to claim 4, wherein the determining M optimal routes that respectively satisfy the M network requirements comprises:

   determining N routes that satisfy an $i^{th}$ network requirement in the M network requirements, wherein N is a positive integer and i satisfies $1 \leq i \leq M$;
   calculating N consumption values that are in a one-to-one correspondence with the N routes; and
   determining that a route corresponding to a smallest consumption value in the N consumption values is an optimal route satisfying the $i^{th}$ network requirement.

6. The method according to claim 5, wherein the calculating N consumption values that are in a one-to-one correspondence with the N routes comprises:

   calculating N network requirement values that are in a one-to-one correspondence with the N routes; and
   determining, according to a mapping relationship between a network requirement value and a consumption value, the N consumption values that are in a one-to-one correspondence with the N network requirement values, wherein the consumption value is used to indicate a satisfaction level of the user with a network requirement.

7. The method according to any one of claims 4 to 6, wherein the determining the routing policy according to the M optimal routes and the M weighted values (40) comprises:

calculating M consumption values of an $i^{th}$ optimal route in the M optimal routes respectively for the M network requirements;

determining, according to the M weighted values and the M consumption values, a weighted consumption value sum corresponding to the $i^{th}$ network requirement;

determining a variation curve of the consumption value weighted sum within the time range, wherein the variation curve indicates a time-dependent change of the consumption value weighted sum; and

determining M variation curves that are in a one-to-one correspondence with the M network requirements, and determining the routing policy according to the M variation curves.

8. The method according to claim 7, wherein the determining the routing policy according to the M variation curves comprises:

comparing areas of M regions that are respectively formed by the M variation curves and a time axis;

determining, in the M variation curves that form the M regions, that a network requirement corresponding to a variation curve that forms a region having a smallest area is a target network requirement; and

determining the routing policy according to the target network requirement, so as to configure a target route for the user according to the routing policy.

9. An apparatus (900, 1000) for determining a routing policy, wherein the apparatus comprises:

a determining module (910), configured to determine a time range that a user is currently in, wherein the determining module is further configured to determine, according to a routing policy adjustment calendar, network requirement information that is set by the user for the time range, wherein the network requirement information comprises M network requirements, and M weighted values (40) that are in a one-to-one correspondence with the M network requirements, wherein M is a positive integer, and the M weighted values are used to measure requirement levels of the user for the M network requirements; and

a configuration module (920), configured to configure, for the user within the time range, a routing policy that corresponds to the network requirement information and satisfies the M network requirements, wherein the routing policy adjustment calendar comprises the network requirement information corresponding to the time range, and the routing policy corresponding to the network requirement information,

wherein the apparatus is configured to map multiple different network requirement indicators of the user to a uniform scale for comparing calculation results of a same routing policy.

10. The apparatus of claim 9, wherein the uniform scale is a Fibonacci sequence routing policy consumption axis.

11. The apparatus (900, 1000) according to claim 9, wherein the determining module (910) is further configured to:

obtain the network requirement information that is set by the user for the time range; determine, according to the network requirement information, the routing policy that corresponds to the network requirement information and satisfies the M network requirements; and

generate the routing policy adjustment calendar according to the time range and the routing policy that is configured for the user within the time range.

12. The apparatus (900, 1000) according to claim 11, wherein the determining module (910) comprises:

a first determining unit (911), configured to determine M optimal routes that respectively satisfy the M network requirements; and

a second determining unit (912), configured to determine the routing policy according to the M optimal routes and the M weighted values (40).

13. The apparatus (900, 1000) according to claim 12, wherein the first determining unit (911) comprises:

a first determining subunit, configured to determine N routes that satisfy an $i^{th}$ network requirement in the M network requirements, wherein N is a positive integer and i satisfies $1 \leq i \leq M$;

a first calculation subunit, configured to calculate N consumption values that are in a one-to-one correspondence with the N routes; and

a second determining subunit, configured to determine that a route corresponding to a smallest consumption value in the N consumption values is an optimal route satisfying the $i^{th}$ network requirement.

**14.** The apparatus (900, 1000) according to claim 13, wherein the first calculation subunit is specifically configured to:

calculate N network requirement values that are in a one-to-one correspondence with the N routes; and determine, according to a mapping relationship between a network requirement value and a consumption value, the N consumption values that are in a one-to-one correspondence with the N network requirement values, wherein the consumption value is used to indicate a satisfaction level of the user with a network requirement.

**15.** The apparatus (900, 1000) according to any one of claims 12 to 14, wherein the second determining unit (912) comprises:

a third calculation subunit, configured to calculate M consumption values of an $i^{th}$ optimal route in the M optimal routes respectively for the M network requirements; and
a fourth determining subunit, configured to:

determine, according to the M weighted values (40) and the M consumption values, a weighted consumption value sum corresponding to the $i^{th}$ network requirement;
determine a variation curve of the consumption value weighted sum within the time range, wherein the variation curve indicates a time-dependent change of the consumption value weighted sum; and
determine M variation curves that are in a one-to-one correspondence with the M network requirements, and determine the routing policy according to the M variation curves.

**16.** The apparatus (900, 1000) according to claim 15, wherein the fourth determining subunit is specifically configured to:

compare areas of M regions that are respectively formed by the M variation curves and a time axis;
determine, in the M variation curves that form the M regions, that a network requirement corresponding to a variation curve that forms a region having a smallest area is a target network requirement; and
determine the routing policy according to the target network requirement, so as to configure a target route for the user according to the routing policy.

**Patentansprüche**

**1.** Verfahren zum Bestimmen einer Routingrichtlinie, wobei das Verfahren Folgendes umfasst:

Bestimmen (210) einer Zeitspanne, in der sich ein Benutzer derzeit befindet;
Bestimmen (220) von Netzwerkanforderungsinformationen, die vom Benutzer für die Zeitspanne eingestellt werden, gemäß einem Routingrichtlinienanpassungskalender, wobei die Netzwerkanforderungsinformationen M Netzwerkanforderungen und M gewichtete Werte (40), die eine Eins-zu-eins-Entsprechung mit den M Netzwerkanforderungen aufweisen, umfassen, wobei M eine positive Ganzzahl ist und die M gewichteten Werte verwendet werden, um Anforderungsniveaus des Benutzers für die M Netzwerkanforderungen zu messen; und
Auslegen (230) einer Routingrichtlinie, die den Netzwerkanforderungsinformationen entsprechen und die M Netzwerkanforderungen erfüllen, für den Benutzer in der Zeitspanne, wobei der Routingrichtlinienanpassungskalender die Netzwerkanforderungsinformationen, die der Zeitspanne entsprechen, und die Routingrichtlinie, die den Netzwerkanforderungsinformationen entspricht, umfasst,
wobei mehrere verschiedene Netzwerkanforderungsindikatoren des Benutzers einer einheitlichen Skala zum Vergleichen von Berechnungsergebnissen einer selben Routingrichtlinie zugeordnet sind.

**2.** Verfahren nach Anspruch 1, wobei die einheitliche Skala eine Fibonaccifolgenroutingrichtlinienverbrauchsachse ist.

**3.** Verfahren nach Anspruch 1, wobei das Verfahren vor dem Bestimmen einer Zeitspanne, in der sich ein Benutzer derzeit befindet, ferner Folgendes umfasst:

Erhalten der Netzwerkanforderungsinformationen, die vom Benutzer für die Zeitspanne eingestellt werden;
Bestimmen der Routingrichtlinie, die den Netzwerkanforderungsinformationen entsprechen und die M Netzwerkanforderungen erfüllt, gemäß den Netzwerkanforderungsinformationen und
Erzeugen des Routingrichtlinienanpassungskalenders gemäß der Zeitspanne und der Routingrichtlinie, die für den Benutzer in der Zeitspanne ausgelegt ist.

**4.** Verfahren nach Anspruch 3, wobei das Bestimmen der Routingrichtlinie, die den Netzwerkanforderungsinformationen entspricht und die M Netzwerkanforderungen erfüllt, gemäß den Netzwerkanforderungsinformationen Folgendes umfasst:

Bestimmen (410) von M optimalen Routen, die jeweils die M Netzwerkanforderungen erfüllen; und
Bestimmen (420) der Routingrichtlinie gemäß den M optimalen Routen und den M gewichteten Werten (40).

**5.** Verfahren nach Anspruch 4, wobei das Bestimmen von M optimalen Routen, die jeweils die M Netzwerkanforderungen erfüllen, Folgendes umfasst:

Bestimmen von N Routen, die eine i-te Netzwerkanforderung der M Netzwerkanforderungen erfüllen, wobei N eine positive Ganzzahl ist und i 1≤i≤M erfüllt;
Berechnen von N Verbrauchswerten, die eine Eins-zu-eins-Entsprechung mit den N Routen aufweisen; und
Bestimmen, dass eine Route, die einem kleinsten Verbrauchswert der N Verbrauchswerte entspricht, eine optimale Route ist, die die i-te Netzwerkanforderung erfüllt.

**6.** Verfahren nach Anspruch 5, wobei das Berechnen von N Verbrauchswerten, die eine Eins-zu-eins-Entsprechung mit den N Routen aufweisen, Folgendes umfasst:

Berechnen von N Netzwerkanforderungswerten, die eine Eins-zu-eins-Entsprechung mit den N Routen aufweisen; und
Bestimmen der N Verbrauchswerte, die eine Eins-zu-eins-Entsprechung mit den N Netzwerkanforderungswerten aufweisen, gemäß einer Zuordnungsbeziehung zwischen einem Netzwerkanforderungswert und einem Verbrauchswert, wobei der Verbrauchswert verwendet wird, um ein Erfüllungsniveau des Benutzers mit einer Netzwerkanforderung anzuzeigen.

**7.** Verfahren nach einem der Ansprüche 4 bis 6, wobei das Bestimmen der Routingrichtlinie gemäß den M optimalen Routen und den M gewichteten Werten (40) Folgendes umfasst:

jeweiliges Berechnen von M Verbrauchswerten einer i-ten optimalen Route der M optimalen Routen für die M Netzwerkanforderungen;
Bestimmen einer gewichteten Verbrauchswertesumme, die der i-ten Netzwerkanforderung entspricht, gemäß den M gewichteten Werten und den M Verbrauchswerten;
Bestimmen einer Variationskurve der gewichteten Verbrauchswertesumme in der Zeitspanne, wobei die Variationskurve eine zeitabhängige Änderung der gewichteten Verbrauchswertesumme anzeigt; und
Bestimmen von M Variationskurven, die eine Eins-zu-eins-Entsprechung mit den M Netzwerkanforderungen aufweisen, und Bestimmen der Routingrichtlinie gemäß den M Variationskurven.

**8.** Verfahren nach Anspruch 7, wobei das Bestimmen der Routingrichtlinie gemäß den M Variationskurven Folgendes umfasst:

Vergleichen von Bereichen von M Regionen, die jeweils durch die M Variationskurven und eine Zeitachse gebildet werden;
Bestimmen, dass eine Netzwerkanforderung, die einer Variationskurve entspricht, die eine Region mit einem kleinsten Bereich bildet, eine Zielnetzwerkanforderung ist, gemäß den M Variationskurven, die die M Regionen bilden; und
Bestimmen der Routingrichtlinie gemäß der Zielnetzwerkanforderung, derart, dass eine Zielroute für den Benutzer gemäß der Routingrichtlinie ausgelegt wird.

**9.** Vorrichtung (900, 1000) zum Bestimmen einer Routingrichtlinie, wobei die Vorrichtung Folgendes umfasst:

ein Bestimmungsmodul (910), das dazu ausgelegt ist, eine Zeitspanne zu bestimmen, in der sich ein Benutzer derzeit befindet, wobei
das Bestimmungsmodul ferner dazu ausgelegt ist, Netzwerkanforderungsinformationen, die vom Benutzer für die Zeitspanne eingestellt werden, gemäß einem Routingrichtlinienanpassungskalender zu bestimmen, wobei die Netzwerkanforderungsinformationen M Netzwerkanforderungen und M gewichtete Werte (40), die eine Eins-zu-eins-Entsprechung mit den M Netzwerkanforderungen aufweisen, umfassen, wobei M eine positive Ganzzahl ist und die M gewichteten Werte verwendet werden, um Anforderungsniveaus des Benutzers für die M Netzwerkanforderungen zu messen; und

ein Auslegungsmodul (920), das dazu ausgelegt ist, eine Routingrichtlinie, die den Netzwerkanforderungsinformationen entspricht und die M Netzwerkanforderungen erfüllt, für den Benutzer in der Zeitspanne auszulegen, wobei der Routingrichtlinienanpassungskalender die Netzwerkanforderungsinformationen, die der Zeitspanne entsprechen, und die Routingrichtlinie, die den Netzwerkanforderungsinformationen entspricht, umfasst,

wobei die Vorrichtung dazu ausgelegt ist, mehrere verschiedene Netzwerkanforderungsindikatoren des Benutzers einer einheitlichen Skala zum Vergleichen von Berechnungsergebnissen einer selben Routingrichtlinie zuzuordnen.

10. Vorrichtung nach Anspruch 9, wobei die einheitliche Skala eine Fibonaccifolgenroutingrichtlinienverbrauchsachse ist.

11. Vorrichtung (900, 1000) nach Anspruch 9, wobei das Bestimmungsmodul (910) ferner zu Folgendem ausgelegt ist:

Erhalten der Netzwerkanforderungsinformationen, die vom Benutzer für die Zeitspanne eingestellt werden; Bestimmen der Routingrichtlinie, die den Netzwerkanforderungsinformationen entspricht und die M Netzwerkanforderungen erfüllt, gemäß den Netzwerkanforderungsinformationen und

Erzeugen des Routingrichtlinienanpassungskalenders gemäß der Zeitspanne und der Routingrichtlinie, die für den Benutzer in der Zeitspanne ausgelegt ist.

12. Vorrichtung (900, 1000) nach Anspruch 11, wobei das Bestimmungsmodul (910) Folgendes umfasst:

eine erste Bestimmungseinheit (911), die dazu ausgelegt ist, M optimale Routen, die jeweils die M Netzwerkanforderungen erfüllen, zu bestimmen; und

eine zweite Bestimmungseinheit (912), die dazu ausgelegt ist, die Routingrichtlinie gemäß den M optimalen Routen und den M gewichteten Werten (40) zu bestimmen.

13. Vorrichtung (900, 1000) nach Anspruch 12, wobei die erste Bestimmungseinheit (911) Folgendes umfasst:

eine erste Bestimmungsuntereinheit, die dazu ausgelegt ist, N Routen zu bestimmen, die eine i-te Netzwerkanforderung der M Netzwerkanforderungen erfüllen, wobei N eine positive Ganzzahl ist und i $1 \leq i \leq M$ erfüllt; eine erste Berechnungsuntereinheit, die dazu ausgelegt ist, N Verbrauchswerte, die eine Eins-zu-eins-Entsprechung mit den N Routen aufweisen, zu berechnen; und

eine zweite Bestimmungsuntereinheit, die dazu ausgelegt ist zu bestimmen, dass eine Route, die einem kleinsten Verbrauchswert der N Verbrauchswerte entspricht, eine optimale Route ist, die die i-te Netzwerkanforderung erfüllt.

14. Vorrichtung (900, 1000) nach Anspruch 13, wobei die erste Berechnungsuntereinheit speziell zu Folgendem ausgelegt ist:

Berechnen von N Netzwerkanforderungswerten, die eine Eins-zu-eins-Entsprechung mit den N Routen aufweisen; und

Bestimmen der N Verbrauchswerte, die eine Eins-zu-eins-Entsprechung mit den N Netzwerkanforderungswerten aufweisen, gemäß einer Zuordnungsbeziehung zwischen einem Netzwerkanforderungswert und einem Verbrauchswert, wobei der Verbrauchswert verwendet wird, um ein Erfüllungsniveau des Benutzers mit einer Netzwerkanforderung anzuzeigen.

15. Vorrichtung (900, 1000) nach einem der Ansprüche 12 bis 14, wobei die zweite Bestimmungseinheit (912) Folgendes umfasst:

eine dritte Berechnungsuntereinheit, die dazu ausgelegt ist, jeweils M Verbrauchswerte einer i-ten optimalen Route der M optimalen Routen für die M Netzwerkanforderungen zu berechnen; und eine vierte Bestimmungsuntereinheit, die zu Folgendem ausgelegt ist:

Bestimmen einer gewichteten Verbrauchswertesumme, die der i-ten Netzwerkanforderung entspricht, gemäß den M gewichteten Werten (40) und den M Verbrauchswerten;

Bestimmen einer Variationskurve der gewichteten Verbrauchswertesumme in der Zeitspanne, wobei die Variationskurve eine zeitabhängige Änderung der gewichteten Verbrauchswertesumme anzeigt; und Bestimmen von M Variationskurven, die eine Eins-zu-eins-Entsprechung mit den M Netzwerkanforderungen aufweisen, und Bestimmen der Routingrichtlinie gemäß den M Variationskurven.

16. Vorrichtung (900, 1000) nach Anspruch 15, wobei die vierte Bestimmungsuntereinheit speziell zu Folgendem ausgelegt ist:

Vergleichen von Bereichen von M Regionen, die jeweils durch die M Variationskurven und eine Zeitachse gebildet werden;
Bestimmen, dass eine Netzwerkanforderung, die einer Variationskurve entspricht, die eine Region mit einem kleinsten Bereich bildet, eine Zielnetzwerkanforderung ist, gemäß den M Variationskurven, die die M Regionen bilden; und
Bestimmen der Routingrichtlinie gemäß der Zielnetzwerkanforderung, derart, dass eine Zielroute für den Benutzer gemäß der Routingrichtlinie ausgelegt wird.

**Revendications**

1. Procédé de détermination d'une politique de routage, le procédé comprenant :

la détermination (210) d'une plage temporelle dans laquelle se trouve actuellement un utilisateur ;
la détermination (220), en fonction d'un calendrier de réglage de la politique de routage, d'informations d'exigences de réseau qui sont réglées par l'utilisateur pour la plage temporelle, les informations d'exigences de réseau comprenant M exigences de réseau, et M valeurs pondérées (40) qui sont dans une correspondance univoque avec les M exigences de réseau, M étant un nombre entier positif, et les M valeurs pondérées étant utilisées pour mesurer des niveaux d'exigences de l'utilisateur pour les M exigences de réseau ; et
la configuration (230), pour l'utilisateur dans la plage temporelle, d'une politique de routage qui correspond aux informations d'exigences de réseau et satisfait les M exigences de réseau, le calendrier de réglage de la politique de routage comprenant les informations d'exigences de réseau correspondant à la plage temporelle, et la politique de routage correspondant aux informations d'exigences de réseau,
dans lequel de multiples indicateurs d'exigences de réseau différents de l'utilisateur sont mappés sur une échelle uniforme pour comparer des résultats de calcul d'une même politique de routage.

2. Procédé selon la revendication 1, dans lequel l'échelle uniforme est un axe de consommation de politique de routage de séquence de Fibonacci.

3. Procédé selon la revendication 1, avant la détermination d'une plage temporelle dans laquelle se trouve actuellement un utilisateur, le procédé comprenant en outre :

l'obtention des informations d'exigences de réseau qui sont réglées par l'utilisateur pour la plage temporelle ;
la détermination, en fonction des informations d'exigences de réseau, de la politique de routage qui correspond aux informations d'exigences de réseau et satisfait les M exigences de réseau ; et
la génération du calendrier de réglage de la politique de routage en fonction de la plage temporelle et de la politique de routage qui est configurée pour l'utilisateur dans la plage temporelle.

4. Procédé selon la revendication 3, dans lequel la détermination, en fonction des informations d'exigences de réseau, de la politique de routage qui correspond aux informations d'exigences de réseau et satisfait les M exigences de réseau comprend :

la détermination (410) de M routes optimales qui satisfont respectivement les M exigences de réseau ; et
la détermination (420) de la politique de routage en fonction des M routes optimales et des M valeurs pondérées (40).

5. Procédé selon la revendication 4, dans lequel la détermination de M routes optimales qui satisfont respectivement les M exigences de réseau comprend :

la détermination de N routes qui satisfont une $i^{ème}$ exigence de réseau dans les M exigences de réseau, N étant un nombre entier positif et i satisfaisant $1 \leq i \leq M$ ;

le calcul de N valeurs de consommation qui sont dans une correspondance univoque avec les N routes ; et la détermination qu'une route correspondant à une valeur de consommation la plus petite dans les N valeurs de consommation est une route optimale satisfaisant l'i$^{ème}$ exigence de réseau.

6. Procédé selon la revendication 5, dans lequel le calcul de N valeurs de consommation qui sont dans une correspondance univoque avec les N routes comprend :

le calcul de N valeurs d'exigences de réseau qui sont dans une correspondance univoque avec les N routes ; et la détermination, en fonction d'une relation de mappage entre une valeur d'exigences de réseau et une valeur de consommation, des N valeurs de consommation qui sont dans une correspondance univoque avec les N valeurs d'exigences de réseau, la valeur de consommation étant utilisée pour indiquer un niveau de satisfaction de l'utilisateur avec une exigence de réseau.

7. Procédé selon l'une quelconque des revendications 4 à 6, dans lequel la détermination de la politique de routage en fonction des M routes optimales et des M valeurs pondérées (40) comprend :

le calcul de M valeurs de consommation d'une i$^{ème}$ route optimale dans les M routes optimales respectivement pour les M exigences de réseau ; la détermination, en fonction des M valeurs pondérées et des M valeurs de consommation, d'une somme de valeurs de consommation pondérée correspondant à l'i$^{ème}$ exigence de réseau ; la détermination d'une courbe de variation de la somme pondérée de valeurs de consommation dans la plage temporelle, la courbe de variation indiquant un changement dépendant du temps de la somme pondérée de valeurs de consommation ; et la détermination de M courbes de variation qui sont dans une correspondance univoque avec les M exigences de réseau, et la détermination de la politique de routage en fonction des M courbes de variation.

8. Procédé selon la revendication 7, dans lequel la détermination de la politique de routage en fonction des M courbes de variation comprend :

la comparaison de zones de M régions qui sont formées respectivement par les M courbes de variation et un axe temporel ; la détermination, dans les M courbes de variation qui forment les M régions, qu'une exigence de réseau correspondant à une courbe de variation qui forme une région ayant une zone la plus petite est une exigence de réseau cible ; et la détermination de la politique de routage en fonction de l'exigence de réseau cible, de manière à configurer une route cible pour l'utilisateur en fonction de la politique de routage.

9. Appareil (900, 1000) permettant de déterminer une politique de routage, l'appareil comprenant :

un module de détermination (910), configuré pour déterminer une plage temporelle dans laquelle se trouve actuellement un utilisateur, dans lequel le module de détermination est configuré en outre pour déterminer, en fonction d'un calendrier de réglage de la politique de routage, des informations d'exigences de réseau qui sont réglées par l'utilisateur pour la plage temporelle, les informations d'exigences de réseau comprenant M exigences de réseau, et M valeurs pondérées (40) qui sont dans une correspondance univoque avec les M exigences de réseau, M étant un nombre entier positif, et les M valeurs pondérées étant utilisées pour mesurer des niveaux d'exigences de l'utilisateur pour les M exigences de réseau ; et un module de configuration (920), configuré pour configurer, pour l'utilisateur dans la plage temporelle, une politique de routage qui correspond aux informations d'exigences de réseau et satisfait les M exigences de réseau, dans lequel le calendrier de réglage de la politique de routage comprend les informations d'exigences de réseau correspondant à la plage temporelle, et la politique de routage correspondant aux informations d'exigences de réseau, l'appareil étant configuré pour mapper de multiples indicateurs d'exigences de réseau différents de l'utilisateur sur une échelle uniforme pour comparer des résultats de calcul d'une même politique de routage.

10. Appareil selon la revendication 9, dans lequel l'échelle uniforme est un axe de consommation de politique de routage de séquence de Fibonacci.

11. Appareil (900, 1000) selon la revendication 9, dans lequel le module de détermination (910) est configuré en outre pour :

obtenir les informations d'exigences de réseau qui sont réglées par l'utilisateur pour la plage temporelle ;

déterminer, en fonction des informations d'exigences de réseau, la politique de routage qui correspond aux informations d'exigences de réseau et satisfait les M exigences de réseau ; et

générer le calendrier de réglage de la politique de routage en fonction de la plage temporelle et de la politique de routage qui est configurée pour l'utilisateur dans la plage temporelle.

12. Appareil (900, 1000) selon la revendication 11, dans lequel le module de détermination (910) comprend :

une première unité de détermination (911), configurée pour déterminer M routes optimales qui satisfont respectivement les M exigences de réseau ; et

une seconde unité de détermination (912), configurée pour déterminer la politique de routage en fonction des M routes optimales et des M valeurs pondérées (40).

13. Appareil (900, 1000) selon la revendication 12, dans lequel la première unité de détermination (911) comprend :

une première sous-unité de détermination, configurée pour déterminer N routes qui satisfont une $i^{ème}$ exigence de réseau dans les M exigences de réseau, N étant un nombre entier positif et i satisfaisant $1 \leq i \leq M$ ;

une première sous-unité de calcul, configurée pour calculer N valeurs de consommation qui sont dans une correspondance univoque avec les N routes ; et

une seconde sous-unité de détermination, configurée pour déterminer qu'une route correspondant à une valeur de consommation la plus petite dans les N valeurs de consommation est une route optimale satisfaisant l'$i^{ème}$ exigence de réseau.

14. Appareil (900, 1000) selon la revendication 13, dans lequel la première sous-unité de calcul est configurée spécifiquement pour :

calculer N valeurs d'exigences de réseau qui sont dans une correspondance univoque avec les N routes ; et

déterminer, en fonction d'une relation de mappage entre une valeur d'exigences de réseau et une valeur de consommation, les N valeurs de consommation qui sont dans une correspondance univoque avec les N valeurs d'exigences de réseau, la valeur de consommation étant utilisée pour indiquer un niveau de satisfaction de l'utilisateur avec une exigence de réseau.

15. Appareil (900, 1000) selon l'une quelconque des revendications 12 à 14, dans lequel la seconde unité de détermination (912) comprend :

une troisième sous-unité de calcul, configurée pour calculer M valeurs de consommation d'une $i^{ème}$ route optimale dans les M routes optimales respectivement pour les M exigences de réseau ; et

une quatrième sous-unité de détermination, configurée pour :

déterminer, en fonction des M valeurs pondérées (40) et des M valeurs de consommation, une somme de valeurs de consommation pondérée correspondant à l'$i^{ème}$ exigence de réseau ;

déterminer une courbe de variation de la somme pondérée de valeurs de consommation dans la plage temporelle, la courbe de variation indiquant un changement dépendant du temps de la somme pondérée de valeurs de consommation ; et

déterminer M courbes de variation qui sont dans une correspondance univoque avec les M exigences de réseau, et déterminer la politique de routage en fonction des M courbes de variation.

16. Appareil (900, 1000) selon la revendication 15, dans lequel la quatrième sous-unité de détermination est configurée spécifiquement pour :

comparer des zones de M régions qui sont formées respectivement par les M courbes de variation et un axe temporel :

déterminer, dans les M courbes de variation qui forment les M régions, qu'une exigence de réseau correspondant à une courbe de variation qui forme une région ayant une zone la plus petite est une exigence de réseau cible ; et

déterminer la politique de routage en fonction de l'exigence de réseau cible, de manière à configurer une route cible pour l'utilisateur en fonction de la politique de routage.

Orchestration layer 110

Controller 121

Controller 122

Controller 123

User equipment 131

User equipment 132

User equipment 133

FIG. 1

| Determine a time range that a user is currently in | 210 |

| Determine, according to a routing policy adjustment calendar, network requirement information that is set by the user for the time range | 220 |

| Configure, for the user within the time range, a routing policy that corresponds to the network requirement information and satisfies M network requirements | 230 |

FIG. 2

Network
requirement
of a user

Routing policy
selection
requirement

Smooth
Internet
access

Smallest route
delay

High
reliability
assurance

Smallest route
hop count

Traffic
saving

Route load
balancing

Time mapping
axis

January 1  January 2                    January 6   6:00 on      9:00 on      15:00 on
                                                    January 7   January 7   January 7

FIG. 3

| Determine M optimal routes that respectively satisfy the M network requirements | 410 |

| Determine the routing policy according to the M optimal routes and M weighted values | 420 |

FIG. 4

Orchestration layer 110

A2-C1, A2-C2:
D1L1: A2-B1-C1
Consumption: 10
D1L2: A2-B3-C3
Consumption: 11

E1-G1, E3-G1:
D2L2: E1-F1-G1
Consumption: 11
D2L2: E1-F2-G1
Consumption: 12
D2L3: E3-F2-G1
Consumption: 13

Controller 121

A1    B1    C1
A2    B2    C2
A3    B3    C3

Controller 122

E1    F1    G1
E2    F2    G2
E3    F3    G3

Controller 123

H1    I1    J1
H2    I2    J2
H3    I3    J3

H3-I2, J1-I2:
D3L1: H3-I2          Consumption: 12
D3L2: J1-I2          Consumption: 14
D3L3: H3-I3-J3-I2    Consumption: 16
D3L4: J1-I1-H1-I2    Consumption: 18

FIG. 5

EP 3 399 704 B1

FIG. 6

FIG. 7

Orchestration layer — 110

Controller — 121

801. Divide a route calculation task

802. The route calculation task

803. Calculate an intra-domain routing policy

804. The intra-domain routing policy

805. Determine a new routing policy

806. Routing policy replacement

FIG. 8

Apparatus 900

Determining module 910

First determining unit 911

Second determining unit 912

Configuration module 920

FIG. 9

1000

Transmitter 1005

Receiver 1004

Processor 1001

Memory 1002

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610327091
- WO 2015106795 A1
- US 2002145975 A1